# EUROPÄISCHE PATENTSCHRIFT

(11) **EP 2 611 659 B1**
(45) Veröffentlichungstag und Bekanntmachung des Hinweises auf die Patenterteilung: **14.10.2015**
(21) Anmeldenummer: 11745791.1
(22) Anmeldetag: 19.08.2011
(51) Int. Cl.: B60T 8/40, B60T 11/20, B60T 13/12

(54) **BREMSANLAGE FÜR KRAFTFAHRZEUGE**
BRAKE SYSTEM FOR MOTOR VEHICLES
SYSTÈME DE FREINAGE POUR VÉHICULES AUTOMOBILES

(30) Priorität: 01.09.2010 DE 102010040078
(43) Veröffentlichungstag der Anmeldung: 10.07.2013
(73) Patentinhaber: Continental Teves AG & Co. oHG, 60488 Frankfurt (DE)
(72) Erfinder: DRUMM, Stefan, A., 55291 Saulheim (DE)
(86) Internationale Anmeldenummer: PCT/EP2011/064254
(87) Internationale Veröffentlichungsnummer: WO 2012/028472

(56) Entgegenhaltungen:
- WO-A1-01/72567
- WO-A1-2010/089161
- DE-A1-102004 025 638

## Beschreibung

Die vorliegende Erfindung betrifft eine Bremsanlage für Kraftfahrzeuge, die in einer "Brake-by-Wire" Betriebsart sowohl vom Fahrzeugführer als auch unabhängig vom Fahrzeugführer ansteuerbar ist, vorzugsweise in der "Brake-by-Wire" Betriebsart betrieben wird und in mindestens einer Rückfallbetriebsart betrieben werden kann, in der nur der Betrieb durch den Fahrzeugführer möglich ist, mit
a) einem Bremspedal zum Betätigen eines Pedalkraftübertragungselements, auf das bei der Betätigung der Bremsanlage durch den Fahrzeugführer eine Betätigungskraft (Pedalkraft) ausgeübt wird, das in einem in einem Gehäuse einen hydraulischen Rückhalteraum begrenzenden, hydraulischen Rückhaltekolben längs einer Betätigungsachse verschiebbar geführt wird,
b) einer Wegerfassungseinrichtung, die den Betätigungsweg des Pedalkraftübertragungselements erfasst,
c) einem Wegsimulator, der in der Betriebsart "Brake-by-wire" dem Fahrzeugführer das gewohnte Bremspedalgefühl vermittelt, der mit dem Pedalkraftübertragungselement in Kraft übertragender Verbindung steht und dessen Wirkung in der Rückfallbetriebsart abschaltbar ist,
d) einer elektrohydraulischen Druckbereitstellungseinrichtung, die einen Bremssystemdruck abgibt,
e) elektrisch steuerbaren Druckmodulationsventilen zum Einstellen radindividueller Bremsdrücke, die aus dem Bremssystemdruck abgeleitet werden, wobei die Druckmodulationsventile im nicht angesteuerten Zustand den Bremssystemdruck abgeben bzw. weiterleiten,
f) Trennkolbeneinrichtungen, die auf einer ersten Trennkolbenfläche mit dem durch die Druckmodulationsventile eingestellten beziehungsweise weitergeleiteten Druck beaufschlagt werden und auf einer zweiten Trennkolbenfläche einen Druck aufbauen, der über hydraulische Verbindungen an die Radbremsen weitergegeben wird,
g) Ansteuerungselementen zur mechanischen Ansteuerung der Trennkolbeneinrichtungen, sowie
h) einer elektronischen Steuer- und Regeleinheit.

Eine derartige Bremsanlage ist z.B. aus der internationalen Patentanmeldung WO 01/72567 A1 bekannt. Als nachteilig wird bei dem vorbekannten Bremssystem die relativ komplizierte, aufwändige Ausbildung der elektrohydraulischen Mittel zum Einstellen der Trennkolbenbeaufschlagungsdrücke empfunden, bei der jedem Trennkolben ein Paar Druckmodulationsventile zugeordnet ist.

Es ist daher Aufgabe der vorliegenden Erfindung, eine Vereinfachung des Aufbaus der Bremsanlage der eingangs genannten Gattung zu erreichen bzw. eine Bremsanlage vorzuschlagen, bei der insbesondere im Bereich der elektrohydraulischen Mittel zum Einstellen der Trennkolbenbeaufschlagungsdrücke eine wesentliche Konstruktionsvereinfachung sowie eine Senkung der Herstellungskosten erreicht wird.

Diese Aufgabe wird erfindungsgemäß dadurch gelöst, dass die erste Trennkolbenfläche sowie die zweite Trennkolbenfläche an einem ersten Trennkolbenabschnitt ausgebildet sind und die erste Trennkolbenfläche mit einer an einem zweiten Trennkolbenabschnitt ausgebildeten dritten Trennkolbenfläche einen Zwischenraum begrenzt, der an die elektrohydraulische Druckbereitstellungseinrichtung über jeweils ein Druckmodulationsventil angeschlossen ist, mittels dessen im Zwischenraum sowohl ein Druckaufbau als auch ein Druckabbau erfolgt. Vorteilhafte Weiterbildungen des Erfindungsgegenstandes sind in den Unteransprüchen 2 bis 15 aufgeführt.

In der folgenden Beschreibung wird die vorliegende Erfindung unter Bezugnahme auf die beiliegende schematische Zeichnung an zwei Ausführungsbeispielen erläutert. In der Zeichnung zeigen:
Fig. 1 ein hydraulisches Schaltbild einer ersten Ausführungsform der erfindungsgemäßen Bremsanlage, und
Fig. 2 eine Fig. 1 entsprechende Darstellung einer zweiten Ausführungsform der erfindungsgemäßen Bremsanlage.

Die in der Zeichnung lediglich schematisch dargestellte Bremsanlage weist im Wesentlichen ein mittels eines Bremspedals 1 betätigbares Pedalkraftübertragungselement 2 auf, das in einem hydraulischen Kolben 3 größeren Durchmessers verschiebbar geführt ist, der auch als Rückhaltekolben bezeichnet wird und dessen Ringfläche 26 in einem Gehäuse 20 einen hydraulischen Rückhalteraum 4 begrenzt, der den Rückhaltekolben 3 koaxial umgreift. Die erfindungsgemäße Bremsanlage weist weiterhin dem Rückhaltekolben 3 wirkungsmäßig nachgeschaltete Trennkolbeneinrichtungen 5a-d auf, denen elektrisch steuerbare Druckmodulationsventile 6a-d vorgeschaltet sind und an die nicht dargestellte Fahrzeugbremsen angeschlossen sind, einen Druckmittelvorratsbehälter 12, einen Wegsimulator 13, eine hydraulische Druckbereitstellungseinrichtung 14, sowie eine elektronische Steuer- und Regeleinheit 16 auf. Dabei ist jeder Radbremse eine Trennkolbeneinrichtung 5a - d zugeordnet. Die Trennkolbeneinrichtungen 5a - d sind dabei zweiteilig ausgebildet und bestehen aus einem ersten Trennkolbenabschnitt 7a - d sowie einem zweiten Trennkolbenabschnitt 8a - d. Eine am ersten Trennkolbenabschnitt 7a - d ausgebildete erste Trennkolbenfläche 9a - d begrenzt mit einer am zweiten Trennkolbenabschnitt 8a - d ausgebildeten dritten Trennkolbenfläche 11a - d einen Zwischenraum 16a - d, der über die Druckmodulationsventile 6a-d mit dem von der Druckbereitstellungseinrichtung 14 bereit gestellten hydraulischen Druck im Sinne sowohl eines Druckauf- als auch eines Druckabbaus beaufschlagbar ist. Zum Druckaufbau wird dabei der Bremssystemdruck erhöht und Druckmittel von der Druckbereitstellungseinrichtung 14 über das Druckmodulationsventil 6a - d zum Zwischenraum 16a - d verschoben, während zum Druckabbau der Bremssystemdruck verringert und Druckmittel vom Zwischenraum 16a - d über das Druckmodulationsventil 6a - d zur Druckbereitstellungseinrichtung 14 verschoben wird.

Eine am ersten Trennkolbenabschnitt 7a - d ausgebildete zweite Trennkolbenfläche 10a - d begrenzt im Gehäuse 20 einen hydraulischen Druckraum 15a - d, an den die vorhin erwähnten Radbremsen angeschlossen sind. Im hydraulischen Druckraum 15a - d ist eine Rückstellfeder 32a - d angeordnet, mit deren Rückstellkraft die einzelnen Trennkolbeneinrichtungen 5a - d entgegen der Betätigungsrichtung der ersten Trennkolbenabschnitte 7a - d beaufschlagt werden.

Eine Kraftübertragung zwischen dem Rückhaltekolben 3 und den Trennkolbeneinrichtungen 5a - d erfolgt mittels mechanischer Ansteuerungselemente 17a-d, die sich unter Zwischenschaltung einer Druckfeder 18 sowie einer Kraftübertragungsplatte 19 am Rückhaltekolben 3 abstützen. Das Abstützen der Kraftübertragungsplatte 19 am Rückhaltekolben 3 erfolgt dabei vorzugsweise über hydraulische Mittel, die als Kolbenelemente 50 ausgebildet sind. Außerdem stützt sich an der Kraftübertragungsplatte 19 mindestens ein stabförmiges Abstützkraftübertragungselement 25 ab, das mit dem Pedalkraftübertragungselement 2 zusammen wirkt und das nach einem Zusammendrücken der Druckfeder 18 mit Hilfe der hydraulischen Mittel 50 frei beweglich ist, was den Wegsimulator 13 frei schaltet. Der Wegsimulator 13 wird im Wesentlichen durch eine Parallelschaltung einer Simulatorfeder 21 mit einer Elastomerfeder 22 gebildet, die sich am Pedalkraftübertragungselement 2 abstützen, wobei die Auslegung der Druckfeder 18 sowie der Simulatorfeder 21 derart getroffen ist, dass die Federkraft der Druckfeder 18 wesentlich größer ist als die der Simulatorfeder 21. Die Kolbenelemente 50 sind dabei vorzugsweise mit dem im Rückhalteraum 4 eingesteuerten hydraulischen Druck beaufschlagbar, wobei der Rückhalteraum 4 unter Zwischenschaltung eines stromlos offenen (SO-) 2/2-Wegeventils 23 mit der Druckbereitstellungseinrichtung 14 verbunden ist. Ein zweites, stromlos offenes (SO-) 2/2-Wegeventil 24 ist in einer hydraulischen Verbindung eingefügt, die die Druckbereitstellungseinrichtung 14 mit dem Druckmittelvorratsbehälter 12 verbindet.

Der Betätigungsweg des Pedalkraftübertragungselementes 2 wird mittels einer lediglich schematisch angedeuteten Wegerfassungseinrichtung 27 erfasst.

Weiterhin ist in der Zeichnung erkennbar, dass die vorhin erwähnte Druckbereitstellungseinrichtung 14 als ein elektrohydraulischer Aktuator ausgebildet ist, dessen Aktuatorkolben 28 mittels eines schematisch angedeuteten Elektromotors 29 über ein nicht gezeigtes Rotations-Translations-Getriebe betätigbar ist. Dabei wird der vom Aktuatorkolben 28 zurück gelegte Weg durch einen Wegsensor überwacht, der das Bezugszeichen 30 trägt.

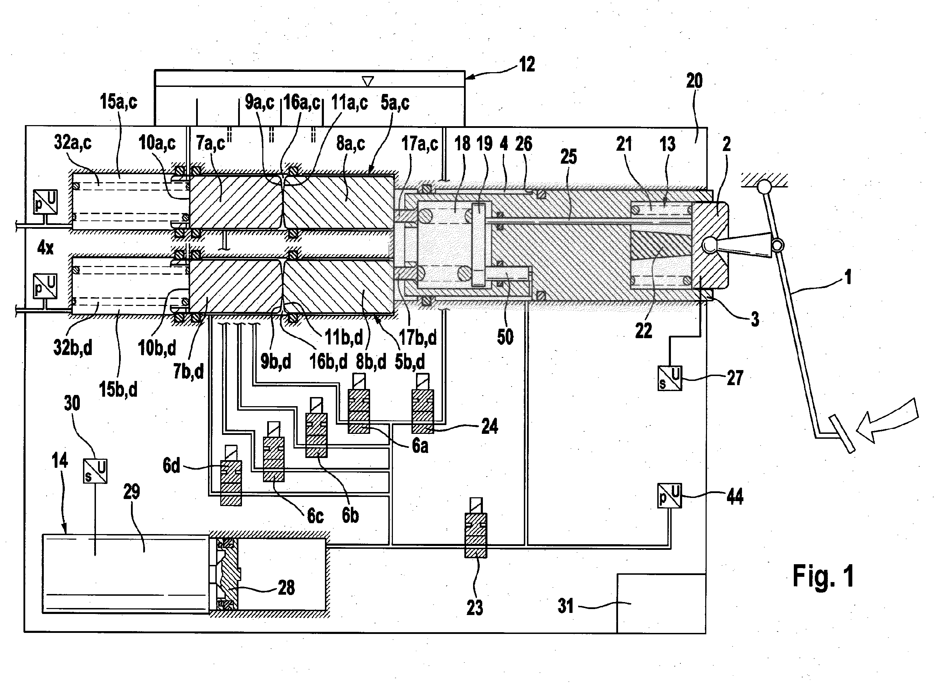

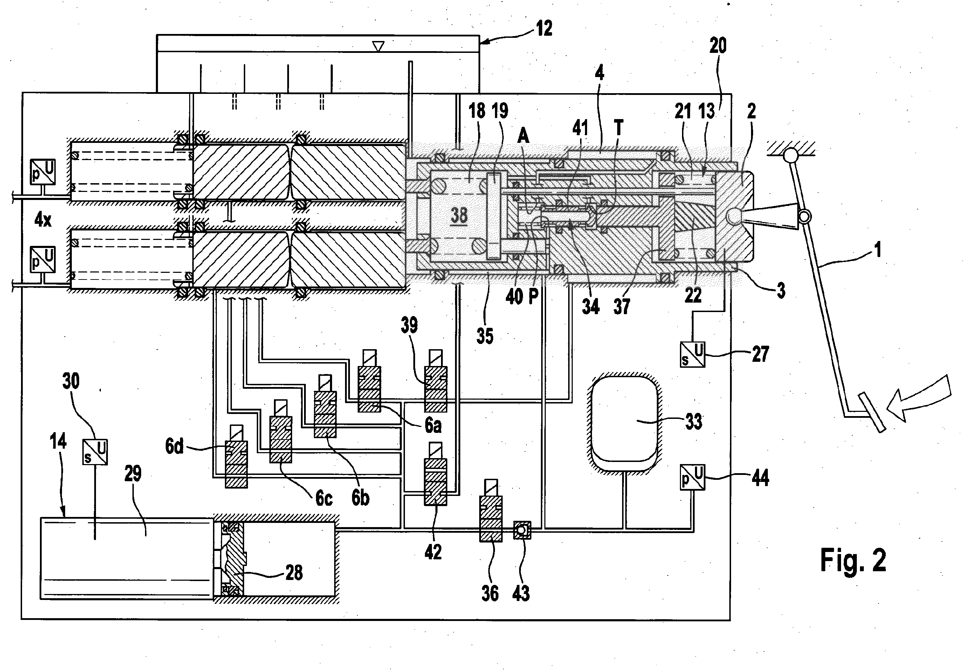

Der Aufbau der in Fig. 2 gezeigten Ausführung des Erfindungsgegenstandes ist weitgehend mit dem der in Fig. 1 dargestellten ersten Ausführung identisch. Zwei wesentliche Unterschiede bilden ein von der Druckbereitstellungseinrichtung 14 aufladbarer Hochdruckspeicher 33 sowie eine vorzugsweise mechanisch betätigbare Druckregelventilanordnung 34, die koaxial zum Rückhaltekolben 3 angeordnet ist. Außerdem begrenzt der Rückhaltekolben 3 im Gehäuse 20 einen zweiten Rückhalteraum 35, der mit dem Hochdruckspeicher 33 kommuniziert. Ein in Fig. 2 mit dem Bezugszeichen 36 bezeichnetes, elektromagnetisch betätigbares, stromlos offenes (SO-) 2/2-Wegeventil ermöglicht in der unbetätigten Schaltstellung einerseits eine Verbindung zwischen der Druckbereitstellungseinrichtung 14 und dem Hochdruckspeicher 33 und andererseits zwischen der Druckbereitstellungseinrichtung 14 und dem zweiten Rückhalteraum 35. Im Leitungsabschnitt zwischen dem 2/2-Wegeventil 36 und dem Hochdruckspeicher 33 ist ein zum Hochdruckspeicher 33 öffnendes Ausstoß-Rückschlagventil 43 eingefügt. Der Erfassung des im Hochdruckspeicher 33 bereit gehaltenen Druckes dient ein Drucksensor 44.

Fig. 2 ist weiterhin zu entnehmen, dass die Druckregelventilanordnung 34 mittels eines Druckregelventilbetätigungselementes 37 betätigbar ist, an dem sich die vorhin erwähnte Simulatorfeder 21 sowie die Elastomerfeder 22 abstützen. Die Druckregelventilanordnung 34 ist als ein Schieberventil ausgebildet und weist einen mittels einer Ansprechfeder 40 in Richtung einer Druckabbaustellung vorgespannten, im Rückhaltekolben 3 geführten Ventilkörper 41, einen Behälteranschluss T, einen Druckversorgungsanschluss P sowie einen Arbeitsanschluss A auf. Dabei ist der Behälteranschluss T über einen drucklosen hydraulischen Raum 38, der im Rückhaltekolben 3 ausgebildet ist und die Druckfeder 18 sowie die Kraftübertragungsplatte 19 aufnimmt, mit dem Druckmittelvorratsbehälter 12 verbunden. Der Druckversorgungsanschluss P ist über den zweiten Rückhalteraum 35 mit dem Hochdruckspeicher 33 verbunden, während der Arbeitsanschluss A über den ersten Rückhalteraum 4 und ein stromlos offenes (SO-) 2/2-Wegeventil 39 mit den Eingangsanschlüssen der Druckmodulationsventile 6a - d in Verbindung steht. Außerdem sind der Ausgangsanschluss der elektrohydraulischen Druckbereitstellungseinrichtung 14 bzw. die Eingangsanschlüsse der Druckmodulationsventile 6a - d über ein stromlos geschlossenes (SG-) 2/2-Wegeventil 42 mit dem Druckmittelvorratsbehälter 12 verbunden.

Wie der Fachmann der Fig. 2 ohne weiteres entnehmen kann, ist die vorhin mehrfach erwähnte Druckregelventilanordnung 34 als ein 3/3-Wegeventil ausgebildet, das vom Fahrer mittels des Druckregelventilbetätigungselementes 37 ansteuerbar ist. Zur Realisierung der in der Zeichnung als 3/3-Wegeventil dargestellten Druckregelventilanordnung 34 kann sowohl die Schieberventiltechnik als auch die Sitzventiltechnik oder eine Kombination dieser Varianten eingesetzt werden. Ausdrücklich sei an dieser Stelle darauf hingewiesen, dass es zwischen den Schaltstellungen der Druckregelventilanordnung 34 mit wechselnden hydraulischen Durchgängen und Verschlüssen kontinuierliche Übergangszustände gibt, die bei entsprechender Ansteuerung im regelungstechnischen Sinne stabil angefahren werden können. Das dargestellte 3/3 Wegeventil ist demnach als Analogventil ausgeführt und nicht als Schaltventil mit instabilen Übergangszuständen.

Im nachfolgenden Text wird die Funktionsweise der erfindungsgemäßen Bremsanlage an dem in Fig. 1 gezeigten Ausführungsbeispiel näher erläutert.

Im unbetätigten Zustand des Bremspedals 1 wird das Pedalkraftübertragungselement 2 mitsamt dem daran angekoppelten Bremspedal 1 über die Parallelschaltung der Simulatorfedern 21, 22 an einem näher nicht bezeichneten Anschlag gehalten, während der Rückhaltekolben 3 von der vorgespannten Druckfeder 18 an einem Anschlag im Gehäuse 20 und die Trennkolbeneinrichtungen von den genannten Rückstellfedern 32a - d an den Rückhaltekolben 3 angedrückt werden. In der bevorzugten Brake-by-Wire-Betriebsart wird eine Bewegung des Bremspedals 1 mit einer Bewegung des Pedalkraftübertragungselementes 2 gekoppelt. Dabei wird der Weg des mit dem Bremspedal 1 gekoppelten Pedalkraftübertragungselementes 2 mittels der Wegerfassungseinrichtung 27 erfasst. Aus diesem erfassten Signal, das den Bremspedalweg repräsentiert, wird in der lediglich schematisch dargestellten elektronischen Steuereinheit 31 der Fahrerverzögerungswunsch ermittelt. Aus diesem Verzögerungswunsch wird ein Systemdruckwert berechnet. Schließlich werden bei Bedarf aus dem zunächst für alle Radbremsen gemeinsam vorgesehenen Systemdruckwert radindividuelle Radbremsdruckwerte abgeleitet - beispielsweise mit Hilfe von ABS, ASR und ESP Regelalgorithmen zur Vermeidung blockierender und durchdrehender Räder und des Schleuderns des Fahrzeugs oder eines Fahrzeugüberschlags.

Zur Beaufschlagung der Radbremsen mit dem Systemdruckwert kann durch elektronische Ansteuerung der Druckbereitstellungseinrichtung 14 dieser Druck über die Druckmodulationsventile 6a bis 6d und die Trennkolbeneinrichtungen 5a - d in allen Radbremsen bereitgestellt werden. Soll dabei der Druck einer Radbremse abgebaut werden, so ist dies über ein Öffnen des entsprechenden Druckmodulationsventils 6a - d, sowie des vorhin erwähnten stromlos offenen 2/2-Wegeventils 24 möglich. Bei den genannten Druckregelvorgängen im Brake-by-Wire Modus wird der Rückhaltekolben 3 durch den Systemdruck an einem nicht gezeigten Anschlag im Gehäuse 20 gehalten, so dass dem Fahrer bei Betätigung des Bremspedals 1 ein Pedalgefühl vermittelt wird, das durch die elastischen Federn 21, 22 des Wegsimulators 13 vorgegeben ist.

Bei einem Stromausfall, der beispielsweise durch einen Batteriedefekt, einen Kurzschluss oder durch Ausschalten der Zündung verursacht wird, geht die erfindungsgemäße Bremsanlage automatisch in eine Rückfallbetriebsart über, in der nur Fahrerbremsungen möglich sind. In dieser Betriebsart bewegt sich bei einer Pedalbetätigung der Rückhaltekolben 3 in der Zeichnung nach links. In diesem Fall greifen die vorhin beschriebenen, mechanisch betätigbaren Ansteuerungselemente 17a - d, die die Bewegung des Rückhaltekolbens 3 auf die Trennkolben 5a - d übertragen. Die Übertragung erfolgt dabei vorzugsweise derart, dass die Trennkolbenwege gleich dem Weg des Rückhaltekolbens 3 sind. Durch geeignete konstruktive Dimensionierung, ändert sich bei der Inanspruchnahme der Rückfallebene die Pedalcharakteristik in einem Maß, das dem Fahrer signalisiert, dass sich das Bremssystem in einer Notfallbetriebsart befindet, wobei die Änderung der Pedalcharakteristik so ausgelegt wird, dass keine allzu große Irritation des Fahrers eintritt.

Die vorgeschlagene Bremsanlage ist durch die vier hydrostatischen Radbremskreise sicherer als alle heute in Serie gebauten Bremssysteme, und zwar bei gleichem, wenn nicht sogar geringerem Aufwand an Bauraum, Gewicht und Anzahl von technisch anspruchsvollen Teilen wie Ventile, Kolben und Dichtungen. Als "Brake-by-Wire"-Bremssystem erfüllt sie die aktuellen Forderungen nach integrierter Bremskraftverstärkung mit frei definierbarer Kennlinie, beispielsweise mit "Springerfunktion", Fremdsteuerbarkeit und Pedalrückwirkungsfreiheit bei elektronischen Eingriffen zur Bremsdruckregelung.

## Patentansprüche

1. Bremsanlage für Kraftfahrzeuge, die in einer "Brake-by-Wire" Betriebsart sowohl vom Fahrzeugführer als auch unabhängig vom Fahrzeugführer ansteuerbar ist, vorzugsweise in der "Brake-by-Wire" Betriebsart betrieben wird und in mindestens einer Rückfallbetriebsart betrieben werden kann, in der nur der Betrieb durch den Fahrzeugführer möglich ist, mit
a) einem Bremspedal (1) zum Betätigen eines Pedalkraftübertragungselements (2), auf das bei der Betätigung der Bremsanlage durch den Fahrzeugführer eine Betätigungskraft ausgeübt wird, das in einem in einem Gehäuse (20) einen hydraulischen Rückhalteraum (4) begrenzenden, hydraulischen Rückhaltekolben (3) längs einer Betätigungsachse verschiebbar geführt wird,
b) einer Wegerfassungseinrichtung (27), die den Betätigungsweg des Pedalkraftübertragungselements (2) erfasst,
c) einem Wegsimulator (13 bzw. 21, 22),der in der Betriebsart "Brake-by-wire" dem Fahrzeugführer das gewohnte Bremspedalgefühl vermittelt, der mit dem Pedalkraftübertragungselement (2) in Kraft übertragender Verbindung steht und dessen Wirkung in der Rückfallbetriebsart abschaltbar ist,
d) einer elektrohydraulischen Druckbereitstellungseinrichtung (14), die einen Bremssystemdruck abgibt,
e) elektrisch steuerbaren Druckmodulationsventilen (6a - d) zum Einstellen radindividueller Bremsdrücke, die aus dem Bremssystemdruck abgeleitet werden, wobei die Druckmodulationsventile (6a - d) im nicht angesteuerten Zustand den Bremssystemdruck abgeben bzw. weiterleiten,
f) Trennkolbeneinrichtungen (5a - d bzw.7a - d, 8a-d), die auf einer ersten Trennkolbenfläche (9a - d) mit dem durch die Druckmodulationsventile (6a - d) eingestellten beziehungsweise weitergeleiteten Druck beaufschlagt werden und auf einer zweiten Trennkolbenfläche (10a - d) einen Druck aufbauen, der über hydraulische Verbindungen an die Radbremsen weitergegeben wird,
g) Ansteuerungselementen (17a - d) zur mechanischen Ansteuerung der Trennkolbeneinrichtungen (5a - d bzw. 8a - d), sowie
h) einer elektronischen Steuer- und Regeleinheit (31),
**dadurch gekennzeichnet, dass**
die erste Trennkolbenfläche (9a - d) sowie die zweite Trennkolbenfläche (10a - d) an einem ersten Trennkolbenabschnitt (7a - d) ausgebildet sind und die erste Trennkolbenfläche (9a - d) mit einer an einem zweiten Trennkolbenabschnitt (8a - d) ausgebildeten dritten Trennkolbenfläche (11a - d) einen Zwischenraum (16a-d) begrenzt, der an die elektrohydraulische Druckbereitstellungseinrichtung (14) über jeweils ein Druckmodulationsventil (6a - d) angeschlossen ist, mittels dessen im Zwischenraum (16a - d) sowohl ein Druckaufbau als auch ein Druckabbau erfolgt.

2. Bremsanlage nach Anspruch 1, **dadurch gekennzeichnet, dass** das Pedalkraftübertragungselement (2) sich an einer Kraftübertragungsplatte (19) abstützt, deren Bewegung in der Betätigungsrichtung der Bremsanlage ein Verschieben des Pedalkraftübertragungselements (2) im Sinne der Betätigung des Wegsimulators (13) ermöglicht.

3. Bremsanlage nach Anspruch 2, **dadurch gekennzeichnet, dass** die Abstützung des Pedalkraftübertragungselements (2) an der Kraftübertragungsplatte (19) mittels wenigstens eines stabförmigen Abstützkraftübertragungselements (25) erfolgt.

4. Bremsanlage nach Anspruch 3, **dadurch gekennzeichnet, dass** die Kraftübertragungsplatte (19) entgegen der Betätigungsrichtung mittels einer Druckfeder (18) vorgespannt ist, deren Federkraft wesentlich größer ist als die Federkraft mindestens einer einen Bestandteil des Wegsimulators (13) bildenden Simulatorfeder (21, 22).

5. Bremsanlage nach Anspruch 4, **dadurch gekennzeichnet, dass** das der Kraftübertragungsplatte (19) gegenüber liegende Ende der Druckfeder (18) an den zweiten Trennkolbenabschnitten (8a - d) abgestützt ist, wodurch die vom Pedalkraftübertragungselement (2) über das bzw. die Abstützkraftübertragungselemente (25) auf die Kraftübertragungsplatte (19) übertragene Pedalkraft über die Druckfeder (18) auf die Trennkolbeneinrichtungen (5a-d bzw. 8a - d) übertragbar ist.

6. Bremsanlage nach Anspruch 4 oder 5, **dadurch gekennzeichnet, dass** hydraulische Mittel (50) vorgesehen sind, die mittels der elektrohydraulischen Druckbereitstellungseinrichtung (14) beaufschlagbar sind und bei Beaufschlagung ein Verschieben der Kraftübertragungsplatte (19) in Betätigungsrichtung bewirken, wodurch die Druckfeder (18) komprimiert und das bzw. die Abstützkraftübertragungselemente (25) freigegeben werden.

7. Bremsanlage nach Anspruch 6, **dadurch gekennzeichnet, dass** die hydraulischen Mittel als im Rückhaltekolben (̃3) geführte Kolbenelemente (50) ausgebildet sind.

8. Bremsanlage nach Anspruch 6 oder 7, **dadurch gekennzeichnet, dass** die hydraulischen Mittel (50) über eine hydraulische Verbindung mit dem Rückhalteraum (4) mit dem Rückhaltedruck beaufschlagt sind.

9. Bremsanlage nach einem der Ansprüche 1 bis 7, **dadurch gekennzeichnet, dass** ein zweiter Rückhalteraum (35) und ein Hochdruckspeicher (33) vorgesehen sind, die hydraulisch miteinender kommunizieren, wobei ein Elektromagnetventil (36) vorgesehen ist, über das der Hochdruckspeicher (33) und der zweite Rückhalteraum (35) mit der Druckbereitstellungseinrichtung (14) verbindbar sind.

10. Bremsanlage nach Anspruch 9, wenn rückbezogen auf Anspruch 6 oder 7, **dadurch gekennzeichnet, dass** die hydraulischen Mittel (50) über eine hydraulische Verbindung mit einem der Rückhalteräume (4, 35) druckbeaufschlagt sind.

11. Bremsanlage nach Anspruch 9, wenn rückbezogen auf einen der Ansprüche 4 bis 7, oder nach Anspruch 10, **dadurch gekennzeichnet, dass** im Rückhaltekolben (3) eine vorzugsweise mechanisch betätigbare Druckregelventilanordnung (34) vorgesehen ist, die über ein Druckregelventilbetätigungselement (37) mit der Kraft der Simulatorfedern (21, 22) betätigt wird.

12. Bremsanlage nach Anspruch 11, **dadurch gekennzeichnet, dass** ein Behälteranschluss (T) der Druckregelventilanordnung (34) mit einem Druckmittelvorratsbehälter (12), ein Druckversorgungsanschluss (P) mit dem Hochdruckspeicher (33) und ein Arbeitsanschluss (A) über ein stromlos offenes Elektromagnetventil (39) mit den Druckmodulationsventilen (6a - d) verbunden sind.

13. Bremsanlage nach Anspruch 12, **dadurch gekennzeichnet, dass** die Verbindung des Behälteranschlusses (T) mit dem Druckmittelvorratsbehälter (12) über eine Flutung eines die Druckfeder (18) aufnehmenden Raums (38) im Rückhaltekolben (4) erfolgt.

14. Bremsanlage nach Anspruch 12 oder 13, **dadurch gekennzeichnet, dass** die Verbindung des Druckversorgungsanschlusses (P) mit dem Hochdruckspeicher (33) über den ersten (4) und die Verbindung des Arbeitsanschlusses (A) mit den Druckmodulationsventilen (6a - d) über den zweiten Rückhalteraum (35) erfolgt.

15. Bremsanlage nach einem der Ansprüche 1 bis 14, **dadurch gekennzeichnet, dass** eine mittels eines Elektromagnetventils (23, 39) absperrbare hydraulische Verbindung zwischen der elektrohydraulischen Druckbereitstellungseinrichtung (14) sowie dem hydraulischen Rückhalteraum (4) vorgesehen ist, über die der Rückhalteraum (4) mit Druck beaufschlagbar ist.

## Claims

1. Brake system for motor vehicles which, in a brake-by-wire operating mode, can be activated both by the vehicle driver and independently of the vehicle driver, is operated preferably in the brake-by-wire operating mode and can be operated in at least one fall-back operating mode in which only operation by the vehicle driver is possible, comprising:
a) a brake pedal (1) for actuating a pedal force transmitting element (2) on which an actuating force is exerted when the brake system is actuated by the vehicle driver, which pedal force transmitting element (2) is guided displaceably along an actuation axis in a hydraulic retaining piston (3) which delimits a hydraulic retaining chamber (4) in a housing (20),
b) a travel detecting device (27) which detects the actuation travel of the pedal force transmitting element (2),
c) a travel simulator (13; 21, 22) which in the brake-by-wire operating mode communicates the usual brake pedal feel to the vehicle driver, which is in force-transmitting communication with the pedal force transmitting element (2) and the effect of which can be switched off in the fall-back operating mode,
d) an electrohydraulic pressure generating device (14) which delivers a brake system pressure,
e) electrically controllable pressure modulation valves (6a-d) for setting wheel-individual brake pressures which are derived from the brake system pressure, the pressure modulation valves (6a-d) delivering or transmitting the brake system pressure in the unactivated state,
f) dividing piston devices (5a-d; 7a-d, 8a-d) which are subjected on a first dividing piston surface (9a-d) to the pressure set or transmitted by the pressure modulation valves (6a-d), and on a second dividing piston surface (10a-d) build up a pressure which is transmitted via hydraulic connections to the wheel brakes,
g) activating elements (17a-d) for mechanically activating the dividing piston devices (5a-d; 8a-d), and
h) an electronic control and regulation unit (31),
**characterized in that**
the first dividing piston surface (9a-d) and the second dividing piston surface (10a-d) are formed on a first dividing piston portion (7a-d), and the first dividing piston surface (9a-d) delimits with a third dividing piston surface (11a-d) formed on a second dividing piston portion (8a-d) an intermediate chamber (16a-d) which is connected to the electrohydraulic pressure generating device (14) via one pressure modulation valve (6a-d) in each case, by means of which pressure modulation valve (6a-d) both a pressure build-up and a pressure reduction are effected in the intermediate chamber (16a-d).

2. Brake system according to Claim 1, **characterized in that** the pedal force transmitting element (2) bears against a force transmitting plate (19) the movement of which in the actuation direction of the brake system makes possible a displacement of the pedal force transmitting element (2) in the direction of actuation of the travel simulator (13).

3. Brake system according to Claim 2, **characterized in that** the pedal force transmitting element (2) bears against the force transmitting plate (19) by means of at least one rod-shaped support force transmitting element (25).

4. Brake system according to Claim 3, **characterized in that** the force transmitting plate (19) is preloaded against the actuation direction by means of a compression spring (18) the spring force of which is substantially greater than the spring force of at least one simulator spring (21, 22) forming a component of the travel simulator (13).

5. Brake system according to Claim 4, **characterized in that** the end of the compression spring (18) located opposite the force transmitting plate (19) bears against the second dividing piston portions (8a-d), whereby the pedal force transmitted by the pedal force transmitting element (2) via the support force transmitting element or elements (25) to the force transmitting plate (19) can be transmitted to the dividing piston devices (5a-d; 8a-d) via the compression spring (18).

6. Brake system according to Claim 4 or 5, **characterized in that** there are provided hydraulic means (50) which can be subjected to pressure by means of the electrohydraulic pressure generating device (14) and, when subjected thereto, effect a displacement of the force transmitting plate (19) in the actuation direction, whereby the compression spring (18) is compressed and the support force transmitting element or elements (25) is/are released.

7. Brake system according to Claim 6, **characterized in that** the hydraulic means are in the form of piston elements (50) guided in the retaining piston (3).

8. Brake system according to Claim 6 or 7, **characterized in that** the hydraulic means (50) are subjected to the retaining pressure via a hydraulic connection to the retaining chamber (4).

9. Brake system according to any one of Claims 1 to 7, **characterized in that** a second retaining chamber (35) and a high-pressure accumulator (33) which communicate hydraulically with one another are provided, a solenoid valve (36) via which the high-pressure accumulator (33) and the second retaining chamber (35) are connectable to the pressure generating device (14) being provided.

10. Brake system according to Claim 9, when referring back to Claim 6 or 7, **characterized in that** the hydraulic means (50) are pressurized via a hydraulic connection to one of the retaining chambers (4, 35).

11. Brake system according to Claim 9, when referring back to one of Claims 4 to 7, or according to Claim 10, **characterized in that** a preferably mechanically actuable pressure-regulating valve arrangement (34) is provided in the retaining piston (3) and is actuated via a pressure-regulating valve actuating element (37) with the force of the simulator springs (21, 22).

12. Brake system according to Claim 11, **characterized in that** a reservoir connection (T) of the pressure-regulating valve arrangement (34) is connected to the pressure medium reservoir (12), a pressure supply connection (P) is connected to the high-pressure accumulator (33) and a working connection (A) is connected via a currentlessly open solenoid valve (39) to the pressure modulation valves (6a-d).

13. Brake system according to Claim 12, **characterized in that** the connection of the reservoir connection (T) to the pressure reservoir (12) is effected by flooding of a chamber (38) containing the compression spring (18) in the retaining piston (3).

14. Brake system according to Claim 12 or 13, **characterized in that** the connection of the pressure supply connection (P) to the high-pressure accumulator (33) is effected via the first retaining chamber (4) and the connection of the working connection (A) to the pressure modulation valves (6a-d) via the second retaining chamber (35).

15. Brake system according to any one of Claims 1 to 14, **characterized in that** a hydraulic connection, which can be blocked by means of a solenoid valve (23, 39) and via which the retaining chamber (4) can be subjected to pressure, is provided between the electrohydraulic pressure generating device (14) and the hydraulic retaining chamber (4).

## Revendications

1. Système de freinage pour véhicules automobiles, qui peut être commandé en mode "Brake-by-Wire" aussi bien par le conducteur du véhicule qu'indépendamment du conducteur du véhicule, qui est utilisé de préférence en mode "Brake-by-Wire" et qui peut être utilisé dans au moins un mode de repli, dans lequel seule l'utilisation par le conducteur du véhicule est possible, avec
a) une pédale de frein (1) pour actionner un élément de transmission de force de pédale (2), sur laquelle une force d'actionnement est exercée par le conducteur du véhicule lors de l'actionnement du système de freinage, qui est guidée de façon coulissante le long d'un axe d'actionnement dans un piston de retenue hydraulique (3) limitant dans un boîtier (20) une chambre de retenue hydraulique (4),
b) un dispositif de détection de course (27), qui détecte la course d'actionnement de l'élément de transmission de force de pédale (2),
c) un simulateur de course (13 ou 21, 22), qui communique au conducteur du véhicule, dans le mode "Brake-by-Wire", la sensation usuelle de la pédale de frein, qui est en liaison de transmission de force avec l'élément de transmission de force de pédale (2) et dont l'action peut être déconnectée dans le mode de repli,
d) un dispositif électrohydraulique de production de pression (14), qui délivre une pression du système de freinage,
e) des soupapes de modulation de pression à commande électrique (6a-6d) pour le réglage de pressions de frein de roue individuelles, qui sont déduites de la pression du système de freinage, dans lequel les soupapes de modulation de pression (6a-6d) délivrent ou retransmettent la pression du système de freinage dans l'état non commandé,
f) des dispositifs de piston de séparation (5a-5d ou 7a-7d, 8a-8d), qui sont soumis sur une première face de piston de séparation (9a-9d) à la pression réglée ou retransmise par les soupapes de modulation de pression (6a-6d) et qui établissent sur une deuxième face de piston de séparation (10a-10d) une pression, qui est retransmise aux freins de roue par des conduites hydrauliques,
g) des éléments de commande (17a-17d) pour la commande mécanique des dispositifs de piston de séparation (5a-5d ou 8a-8d), ainsi que
h) une unité électronique de commande et de régulation (31),
**caractérisé en ce que** la première face de piston de séparation (9a-9d) ainsi que la deuxième face de piston de séparation (10a-10b) sont formées sur une première partie de piston de séparation (7a-7d) et la première face de piston de séparation (9a-9d) limite, avec une troisième face de piston de séparation (11a-11d) formée sur une deuxième partie de piston de séparation (8a-8d), une chambre intermédiaire (16a-16d), qui est raccordée au dispositif électrohydraulique de production de pression (14) respectivement par une soupape de modulation de pression (6a-6d), au moyen de laquelle on opère dans la chambre intermédiaire (16a-16d) aussi bien une hausse de pression qu'une baisse de pression.

2. Système de freinage selon la revendication 1, **caractérisé en ce que** l'élément de transmission de force de pédale (2) s'appuie sur une plaque de transmission de force (19), dont le mouvement dans la direction d'actionnement du système de freinage permet un déplacement de l'élément de transmission de force de pédale (2) au sens de l'actionnement du simulateur de course (13).

3. Système de freinage selon la revendication 2, **caractérisé en ce que** l'appui de l'élément de transmission de force de pédale (2) sur la plaque de transmission de force (19) est effectué au moyen d'au moins un élément de transmission de force d'appui en forme de barre (25).

4. Système de freinage selon la revendication 3, **caractérisé en ce que** la plaque de transmission de force (19) est précontrainte à l'encontre de la direction d'actionnement au moyen d'un ressort de pression (18), dont la force élastique est sensiblement supérieure à la force élastique d'au moins un ressort de simulateur (21, 22) faisant partie du simulateur de course (13).

5. Système de freinage selon la revendication 4, **caractérisé en ce que** l'extrémité du ressort de pression (18) opposée à la plaque de transmission de force (19) est appuyée sur les deuxièmes parties de piston de séparation (8a-8d), la force de pédale transmise par l'élément de transmission de force de pédale (2) à la plaque de transmission de force (19) via le/les élément(s) de transmission de force d'appui (25) pouvant de ce fait être transmise aux dispositifs de piston de séparation (5a-5d ou 8a-8d) via le ressort de pression (18).

6. Système de freinage selon la revendication 4 ou 5, **caractérisé en ce qu'**il est prévu des moyens hydrauliques (50), qui peuvent être soumis à l'action du dispositif électrohydraulique de production de pression (14) et qui provoquent sous cette action un déplacement de la plaque de transmission de force (19), le ressort de pression (18) étant de ce fait comprimé et le/les élément(s) de transmission de force d'appui (25) étant ainsi libéré(s).

7. Système de freinage selon la revendication 6, **caractérisé en ce que** les moyens hydrauliques se présentent sous la forme d'éléments de piston (50) guidés dans le piston de retenue (3).

8. Système de freinage selon la revendication 6 ou 7, **caractérisé en ce que** les moyens hydrauliques (50) sont soumis à la pression de retenue via une liaison hydraulique avec la chambre de retenue (4).

9. Système de freinage selon l'une quelconque des revendications 1 à 7, **caractérisé en ce qu'**il est prévu une deuxième chambre de retenue (35) et un réservoir haute pression (33), qui sont en communication hydraulique l'un avec l'autre, dans lequel il est prévu une soupape électromagnétique (36) par laquelle le réservoir haute pression (33) et la deuxième chambre de retenue (35) peuvent être raccordés au dispositif de production de pression (14).

10. Système de freinage selon la revendication 9, lorsqu'elle se réfère à la revendication 6 ou 7, **caractérisé en ce que** les moyens hydrauliques (50) sont soumis à la pression via une liaison hydraulique avec une des chambres de retenue (4, 35).

11. Système de freinage selon la revendication 9, lorsqu'elle se réfère à une des revendications 4 à 7, ou selon la revendication 10, **caractérisé en ce qu'**il est prévu dans le piston de retenue (3) un agencement de soupape de régulation de pression (34) actionnable de préférence mécaniquement, qui est actionné avec la force des ressorts de simulateur (21, 22) par l'intermédiaire d'un élément d'actionnement de soupape de régulation de pression (37).

12. Système de freinage selon la revendication 11, **caractérisé en ce qu'**un raccord de réservoir (T) de l'agencement de soupape de régulation de pression (34) est raccordé à un réservoir de stockage de fluide sous pression (12), un raccord d'alimentation de pression (P) est raccordé au réservoir haute pression (33) et un raccord de travail (A) est raccordé aux soupapes de modulation de pression (6a-6d) via une soupape électromagnétique (39) ouverte sans courant.

13. Système de freinage selon la revendication 12, **caractérisé en ce que** la liaison du raccord de réservoir (T) avec le réservoir de stockage de fluide sous pression (12) est effectuée par un remplissage d'une chambre (38) contenant le ressort de pression (18) dans le piston de retenue (4).

14. Système de freinage selon la revendication 12 ou 13, **caractérisé en ce que** la liaison du raccord d'alimentation de pression (P) avec le réservoir haute pression (33) est effectuée par la première chambre de retenue (4) et la liaison du raccord de travail (A) avec les soupapes de modulation de pression (6a-6d) est effectuée par la deuxième chambre de retenue (35).

15. Système de freinage selon l'une quelconque des revendications 1 à 14, **caractérisé en ce qu'**il est prévu une liaison hydraulique pouvant être fermée au moyen d'une soupape électromagnétique (23, 39) entre le dispositif électrohydraulique de production de pression (14) et la chambre de retenue hydraulique (4), par laquelle la chambre de retenue (4) peut être mise sous pression.
